# EUROPÄISCHE PATENTANMELDUNG

(11) **EP 1 050 426 A1**
(43) Veröffentlichungstag der Anmeldung: **08.11.2000**
(21) Anmeldenummer: 99108761.0
(22) Anmeldetag: 03.05.1999
(51) Int. Cl.: B60L 5/00, B61L 23/00, B62D 1/28, G05D 1/03

(54) **Selbstfahrender Wagen und System mit derartigem selbstfahrenden Wagen**

(71) Anmelder: Innotech Innovative Stahl- & Fördertechnik GmbH, 83059 Kolbermoor (DE)
(72) Erfinder: Otto, Peter, 09350 Lichtenstein (DE); Schuster, Heinz-Peter, 83064 Raubling (DE)
(74) Vertreter: Grünecker, Kinkeldey, Stockmair & Schwanhäusser Anwaltssozietät

(57) **Zusammenfassung**

Die Erfindung betrifft einen selbstfahrenden Wagen mit einer Lenkeinrichtung, und einem Magnetkopf, der um eine vertikal durch den Wagen verlaufende Achse drehbar gelagert ist, und zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt. Die Erfindung zeichnet sich dadurch aus, daß der drehbar gelagerte Magnetkopf mit der Lenkeinrichtung mechanisch gekoppelt ist, so daß eine durch eine Leitschiene hervorgerufene Drehung des Magnetkopfs um die vertikale Achse eine dem Verlauf der Leitschiene entsprechende Steuerung der Lenkeinrichtung bewirkt. Weiterhin betrifft die Erfindung ein System mit selbstfahrenden Wagen. Dieses System zeichnet sich aus durch wenigstens selbstfahrenden Wagen der oben bezeichneten Art, und eine Leitschiene zur Führung des selbstfahrenden Wagens, wobei der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.

## Beschreibung

### Gebiet der Erfindung

Die vorliegende Erfindung betrifft einen selbstfahrenden Wagen mit einer Lenkeinrichtung, und einem Magnetkopf, der um eine vertikal durch den Wagen verlaufende Achse drehbar gelagert ist, und zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt.

Weiterhin betrifft die vorliegende Erfindung ein System mit einem selbstfahrenden Wagen und einer Leitschiene, in welchem beim Betrieb des Wagens der Magnetkopf des Wagens magnetisch an die Leitschiene gekoppelt ist.

### Stand der Technik

Ein selbstfahrender Wagen und ein System mit einem selbstfahrenden Wagen sind aus der DE 41 19 245 C2 bekannt.

Derartige Wagen können in solchen Systemen als Transportwagen, Staplerwagen, Roboterwagen oder dergleichen vorgesehen werden.

Der in dieser Druckschrift gezeigte Wagen umfaßt weiterhin eine Sensoreinrichtung und eine Steuereinrichtung zur Steuerung der Lenkeinrichtung. Die Sensoreinrichtung erfaßt hierbei die Drehwinkel des Magnetkopfs um die vertikal durch den Wagen verlaufende Achse und gibt diese an eine Steuereinrichtung. Die Steuereinrichtung erzeugt daraufhin ein Signal, durch daß der Wagen derart gelenkt wird, daß er der Leitschiene folgt. Die Sensoreinrichtung und die Steuereinrichtung (einschließlich der Lenkeinrichtung) bilden hierbei einen Regelkreis. Das in dieser Druckschrift gezeigte System umfaßt einen derartigen Wagen und eine Leitschiene.

Nachteil dieses Wagens und des dazugehörigen Systems ist das Erfordernis einer vergleichsweise aufwendigen Steuerung des selbstfahrenden Wagens. Darüber hinaus hat sich in der Praxis gezeigt, daß bei einem derartigen Wagen der durch den Regelkreis aus Sensor und Steuereinrichtung bedingte Istwert/Sollwert-Vergleich dazu führt, daß der Wagen in bezug auf die Längsrichtung der Leitschiene nicht nur eine Längsbewegung sondern auch Querbewegungen ausführt. Demnach ergibt sich insgesamt eine unruhige Fahrt des Wagens.

### Beschreibung der Erfindung

Angesichts dieser Nachteils des Wagens und des Systems gemäß dem Stand der Technik liegt der Erfindung die Aufgabe zugrunde, den bekannten Wagen und das bekannte System zu verbessern.

Insbesondere soll das Vorsehen einer komplizierten Steuerung in Form eines Regelkreises vermieden und eine ruhige Fahrt des Wagens gewährleistet werden.

Diese Aufgabe wird durch einen Wagen der eingangs genannten Art gelöst, der sich dadurch auszeichnet, daß der drehbar gelagerte Magnetkopf mit der Lenkeinrichtung mechanisch gekoppelt ist, so daß eine durch eine Leitschiene hervorgerufene Drehung des Magnetkopfs um die vertikale Achse eine dem Verlauf der Leitschiene entsprechende Steuerung der Lenkeinrichtung bewirkt.

Dadurch daß erfindungsgemäß eine mechanische Kopplung zwischen dem um eine vertikale Achse durch den Wagen drehbar gelagerten Magnetkopf und der Lenkeinrichtung vorgesehen wird, kann jede durch eine Leitschiene bedingte Drehung des Magnetkopfs auf mechanischem Weg direkt auf die Lenkeinrichtung übertragen werden. Hierdurch entfällt gegenüber dem Stand der Technik die Sensoreinrichtung zur Erfassung der Drehung und die Steuereinrichtung zur Erzeugung eines entsprechenden Signals.

Darüber hinaus kann die Lenkeinrichtung durch einfache mechanische Mittel gesteuert werden, so daß die im Stand der Technik erforderliche, durch elektrische Signal steuerbare Lenkeinrichtung vereinfacht werden kann.

Dadurch daß eine magnetische Kopplung zwischen dem Magnetkopf und der Leitschiene vorgesehen ist, und somit der Magnetkopf immer der Leitschiene folgt, werden durch die direkte mechanische Steuerung die Querbewegungen des Wagens in bezug auf die Längsrichtung der Leitschiene verringert, was gegenüber dem Stand der Technik zu einer ruhigeren Fahrt des Wagens führt.

Entsprechend einer vorteilhaften Weiterbildung kann die Lenkeinrichtung eine Vorderradlenkeinheit und/oder eine Hinterradlenkeinheit aufweisen, wobei der drehbar gelagerte Magnetkopf mit der Vorderradlenkeinheit und/oder der Hinterradlenkeinheit mechanisch gekoppelt ist.

Durch diese Maßnahmen kann die Lenkeinrichtung in Abhängigkeit von den Anforderungen des betreffenden Einsatzgebietes optimiert werden.

Die Kombination aus Vorderradlenkeinheit und Hinterradlenkeinheit eignet sich hierbei insbesondere für Lagertransportsystem, da durch eine derartige Lenkeinrichtung sehr kleine Kurvenradien gefahren werden können. Dies führt insbesondere dazu, daß sich ein mit derartigen Wagen betriebenes System durch verringerten Platzbedarf auszeichnet.

Entsprechend einer vorteilhaften Weiterbildung der zuvor beschriebenen Ausführung können die Vorderradlenkeinheit und/oder die Hinterradlenkeinheit durch jeweils eine Lenkstange mit dem drehbar gelagerten Magnetkopf gekoppelt sein.

Hierdurch kann die mechanische Kopplung zwischen Magnetkopf und Lenkeinrichtung auf einfache Weise realisiert werden. Diese Weiterbildung zeichnet sich demnach durch geringe Herstellungskosten aus.

Falls sowohl eine Vorderradlenkeinheit als auch eine Hinterradlenkeinheit eingesetzt wird, können diese mittels einer Koppelstange mit dem drehbar gelagerten Magnetkopf mechanisch verbunden werden. Diese Koppelstange kann einstückig oder mehrstückig ausgebildet sein. Hierdurch können beide Lenkeinheiten auf besonders einfache Weise miteinander gekoppelt werden, was wiederum zu verringerten Herstellungskosten des erfindungsgemäßen Wagens führt.

Die zuvor beschriebenen Ausbildungen können dahingehend vorteilhaft weitergebildet werden, daß der Magnetkopf drehbar an einem ersten Ende eines Auslegers vorgesehen ist, und das andere Ende des Auslegers drehbar um die vertikale Achse gelagert und mechanisch mit der Lenkeinrichtung gekoppelt ist.

Dadurch daß der Magnetkopf auf einem Ausleger vorgesehen ist, wird eine Bewegung des Magnetkopfs unter Einsatz einer durch die Abmessungen des Auslegers bestimmten Hebelkraft auf die Lenkeinrichtung übertragen. Hierdurch können, bei gleicher magnetischer Kopplung zwischen Magnetkopf und Leitschiene die Lenkkräfte erhöht werden, was, beispielsweise im Fall eines Transportwagens eine erhöhte Beladung des Wagens ermöglicht. Für gleiche Lenkkräfte bedeutet diese Weiterbildung, eine geringere Anforderung an die Stärke der magnetischen Kopplung zwischen Magnetkopf und Leitschiene. In diesem Fall kann demnach ein schwächere Kopplung vorgesehen werden, die insgesamt weniger konstruktionellen Aufwand bedeutet und damit kostengünstiger hergestellt werden kann.

In der Ausführung, in der sowohl eine Vorderradlenkeinheit als auch eine Hinterradlenkeinheit vorgesehen ist, kann der Ausleger über eine Welle mit der Koppelstange verbunden sein. Dies ermöglicht eine effiziente Übertragung von Bewegungen des Magnetkopfs auf die Lenkeinrichtung.

Gemäß einer bevorzugten Weiterbildung kann der Ausleger um eine horizontale Achse drehbar gelagert sein. Hierdurch kann der Ausleger gegenüber der Leitschiene nach oben bewegt werden und dadurch etwaigen Hindernissen, die sich auf der Leitschiene befinden, ausweichen.

Weiterhin kann der Magnetkopf eine in Fahrtrichtung angeordnete Abweiseeinrichtung aufweisen. Hierdurch wird ein Schutz des Magnetkopfs vor Beschädigung durch sich auf der Leitschiene befindliche Gegenstände gewährleistet. Diese Ausbildung ist insbesondere im Zusammenhang mit einem horizontal schwenkbaren Ausleger vorteilhaft. Falls ein Gegenstand auf der Leitschiene liegt, wird der Magnetkopf insbesondere beim Kontakt des Auslegers mit diesem Gegenstand, durch den ein Auslenken des Auslegers nach oben bewirkt wird, geschützt.

Gemäß einer bevorzugten Weiterbildung der zuvor beschriebenen Ausführungen können die Vorderradlenkeinheit und/oder die Hinterradlenkeinheit umfassen: einen zweischenkligen Lenkstockhebel, der drehbar mit dem Wagen verbunden ist, wobei das Ende des einen Schenkels drehbar mit dem Lenkhebel verbunden ist, eine erste Lenkschubstange, deren eines Ende mit dem Ende des anderen Schenkels des Lenkstockhebels drehbar verbunden ist, einen Zwischenhebel, dessen eines Ende drehbar mit dem Wagen verbunden ist, eine zweite Lenkschubstange, deren eines Ende mit dem Zwischenhebel drehbar verbunden ist, eine Spurstange, deren eines Ende drehbar mit dem einen Ende der ersten Lenkschubstange und deren anderes Ende drehbar mit dem einen Ende der zweiten Lenkschubstange verbunden ist, einen ersten Radlenkhebel, dessen eines Ende mit dem anderen Ende der ersten Lenkschubstange drehbar verbunden ist und dessen anderes Ende mit einem ersten um eine vertikale Achse drehbar an dem Wagen befestigtem Rad zur Drehung desselben um diese Achse vorgesehen ist, und einen zweiten Radlenkhebel, dessen eines Ende mit dem anderen Ende der zweiten Lenkschubstange drehbar verbunden ist und dessen anderes Ende mit einem zweiten um eine vertikale Achse drehbar an dem Wagen befestigtem Rad zur Drehung desselben um diese Achse vorgesehen ist.

Durch diese vorteilhafte Weiterbildung kann eine mechanisch sehr einfache, aber dennoch sehr effiziente Lenkeinrichtung geschaffen werden. Diese Lenkeinrichtung zeichnet sich einerseits durch geringe Herstellungskosten aus. Andererseits gewährleistet diese Lenkeinrichtung eine der magnetischen Kopplung zwischen Magnetkopf und Schiene angepaßte Kraftübertragung der Bewegung des Magnetkopfs auf die Lenkeinrichtung.

Falls beispielsweise zur Erhöhung der Beladungsgrenze eines Wagens eine erhöhte Lenkkraft erforderlich ist, kann gemäß einer anderen vorteilhaften Weiterbildung nach dem Magnetkopf eine Kraftverstärkungseinrichtung beispielsweise in Form eines Servomotors, vorgesehen werden.

Der Magnetkopf des zuvor beschriebenen Wagens kann wenigstens einen Permanentmagneten oder wenigstens einen Elektromagneten umfassen. Ein Permanentmagnet kann vorteilhafterweise eingesetzt werden, wenn auf geringe Herstellungskosten des Wagens zu achten ist. Ein Elektromagnet erfordert zwar einen höheren konstruktionellen Aufwand, führt hierfür allerdings zu einer besseren Handhabbarkeit der Wagen. Durch Ausschalten des Elektromagneten kann der Wagen unabhängig von der Leitschiene bewegt werden. Dies ist insbesondere von Vorteil, wenn der Wagen über eine Weiche in einem Leitschienensystem fahren soll, oder ganz aus dem Leitschienensystem genommen werden soll.

Gemäß einer bevorzugten Weiterbildung umfaßt der Magnetkopf einen T-förmigen, U-förmigen oder W-förmigen Querschnitt senkrecht zur Längsrichtung des Magnetkopfs aufweist. Hierbei können vorteilhafterweise der bzw. die Schenkel der T-Form, U-Form oder W-Form durch wenigstens einen auf einer Polplatte vorgesehenen Stabmagneten ausgebildet sein.

Dadurch, daß Stabmagnete den oder die Schenkel der oben bezeichneten Formen bilden, können hohe Feldstärken, die eine hinreichend starke magnetische Kopplung gewährleisten, erzielt werden. Die Verwendung einer Polplatte, beispielsweise aus Weicheisen, auf der diese Stabmagnete vorgesehen sind, bewirkt zusätzlich eine Verstärkung der magnetischen Kopplung.

Die obenstehende Aufgabe wird außerdem gelöst durch ein System mit wenigstens einem selbstfahrenden Wagen gemäß einer der zuvor beschriebenen Ausführungen, und einer Leitschiene zur Führung des selbstfahrenden Wagens, wobei der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.

Durch Verwendung der zuvor beschriebenen Ausführungen des erfindungsgemäßen Wagen lassen sich in dem erfindungsgemäßen System alle bereits im Zusammenhang mit den Ausführungen des Wagens genannten Vorteile verwirklichen. Zur Vermeidung von Wiederholungen wird an dieser Stelle deshalb lediglich auf die oben stehende Diskussion der einzelnen Ausführungen verwiesen.

Gemäß einer Weiterbildung des erfindungsgemäßen Systems kann die Leitschiene im Boden versenkt vorgesehen werden und eine flache Oberseite aufweisen, die in der Ebene des Bodens liegt.

Hierdurch wird vermieden, daß der Betrieb des Systems durch Verschmutzung behindert wird. Da die Leitschienen bündig mit dem Boden vorgesehen sind, wird auf eine Verletzungsgefahr, beispielsweise durch Stolpern über Schienen, vermieden.

Gemäß einer anderen vorteilhaften Weiterbildung des Systems umfaßt die Leitschiene einen Permanentmagneten oder einen Elektromagneten, wobei die Polung des in Richtung des Wagens weisenden Abschnitts der Leitschiene und die Polung des in Richtung der Schiene weisenden Abschnitts des Magnetkopfs einander entgegengesetzte Polarität aufweisen. Hierdurch kann eine besonders starke magnetische Kopplung des Magnetkopfs an die Leitschiene verwirklicht werden. Diese Weiterbildung eignet sich insbesondere, wenn hohe Lenkkräfte, beispielsweise aufgrund sehr hohen Ladegewichts, erforderlich sind. Ein Elektromagnet erleichtert eine Steuerung der Wagen des Systems. Beispielsweise können durch Ein- und Ausschalten verschiedene Weichenstellungen in einem Leitschienensystem realisiert werden.

Alternativ hierzu kann die Leitschiene auch ein Reaktionseisen aufweisen. Hierdurch kann für viele Anwendungsfälle eine hinreichend starke magnetische Kopplung erzielt werden. Vorteil diese Alternative ist es, daß sie relativ einfach und kostengünstig implementiert werden kann.

Vorteilhafterweise kann die Leitschiene T-förmig, U-förmig oder W-förmig ausgebildet sein und so angeordnet werden, daß jeweils der bzw. die Schenkel der T-Form, der U-Form bzw. der W-Form in Richtung des Magnetkopfs zeigen. Dies führt, wie im Fall des Magnetkopfs, zur einfachen Ausbildung von hinreichend hohen Magnetfeldstärken.

Gemäß eine anderen vorteilhaften Weiterbildung des Systems sind die Form des Magnetkopfs und die Form der Leitschiene aufeinander abgestimmt. Es können hierzu insbesondere die Breitenabmessungen des Schenkels bzw. der Schenkel des T-förmigen, U-förmigen oder W-förmigen Magnetkopfs den Breitenabmessungen des Schenkels bzw. der Schenkel der T-förmigen, U-förmigen oder W-förmigen Leitschiene entsprechen.

Hierdurch wird eine maximale Magnetfeldstärke, die zu einer starken Kopplung zwischen Magnetkopf und Leitschiene führt, ausgebildet.

Im folgenden werden bevorzugte Ausführungsformen der Erfindung unter Bezugnahme auf die beigefügte Zeichnung beschrieben. In der Zeichnung zeigen:
- Fig. 1: eine Draufsicht auf die Lenkeinrichtung eines selbstfahrenden Wagens gemäß einer Ausführungsform der Erfindung,
- Fig. 2: eine Seitenansicht eines selbstfahrenden Wagens gemäß einer Ausführungsform der Erfindung,
- Fig. 3: eine Ansicht des in Fig. 2 dargestellten Wagens entlang der Linie I-I,
- Fig. 4: eine Schrägansicht eines Magnetkopfs und einer Leitschiene in einer ersten Ausführungsform eines Systems gemäß der vorliegenden Erfindung,
- Fig. 5: eine Schrägansicht eines Magnetkopfs und einer Leitschiene in einer zweiten Ausführungsform eines Systems gemäß der vorliegenden Erfindung, und
- Fig. 6: eine Schrägansicht eines Magnetkopfs und einer Leitschiene in einer dritten Ausführungsform eines Systems gemäß der vorliegenden Erfindung.

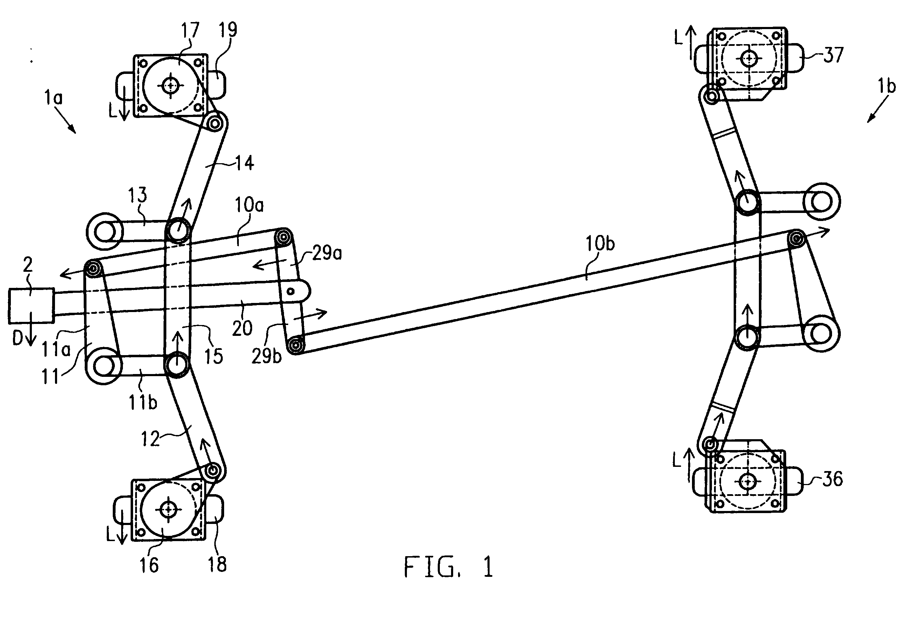

In den Figuren 1, 2 und 3 ist ein Wagen gemäß einer Ausführungsform der vorliegenden Erfindung dargestellt.

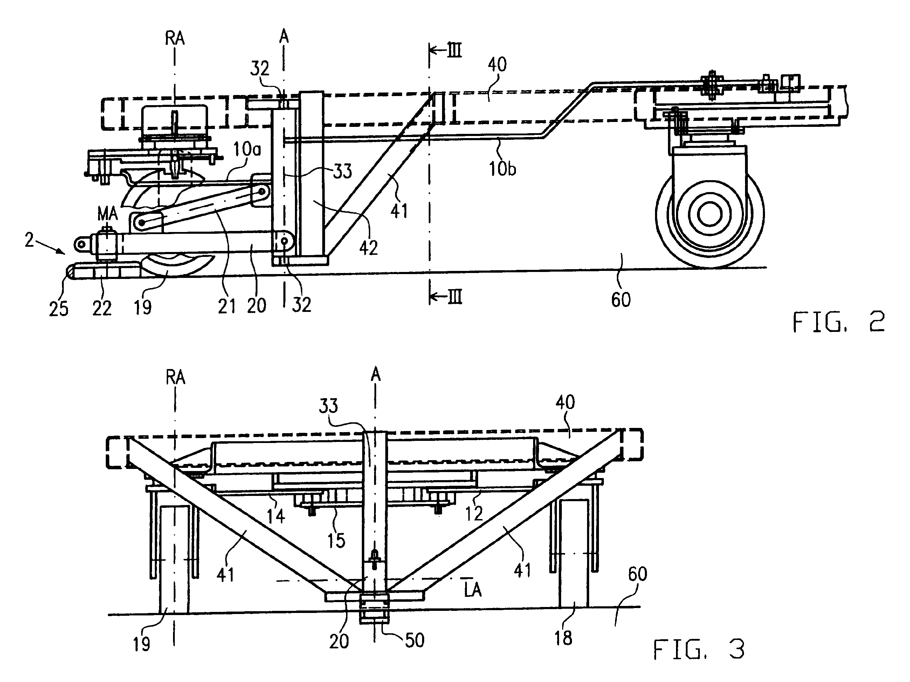

Fig. 1 zeigt hierbei insbesondere eine Draufsicht auf die Lenkeinrichtung des erfindungsgemäßen Wagens. In Fig. 2 ist eine Seitenansicht dieses Wagens dargestellt. In Fig. 3 ist eine Ansicht entlang der Linie I-I in Fig. 2 zu sehen.

Wie insbesondere aus Fig. 2 ersichtlich, umfaßt der erfindungsgemäße Wagen einen Rahmen 40, an dem vier Räder 19 (siehe Fig. 1 ) um eine Längsachse drehbar befestigt sind. In Fig. 2 ist insbesondere das Rad 19 mit seiner vertikalen Drehachse RA dargestellt.

Der Rahmen 40 umfaßt weiterhin eine Haltevorrichtung 41 und 42 für eine drehbare Lagerung eines Magnetkopfs 2 um eine Achse A. Zur drehbaren Lagerung des Magnetkopfs 2 ist eine Welle 33 vorgesehen, die in zwei Lagereinrichtungen 32 drehbar gehaltert ist. An dieser Welle ist ein Ausleger 20 um eine in horizontaler Richtung verlaufende Achse hA (siehe insbesondere Fig. 2) gelagert. An dem anderen Ende des Auslegers 20 ist der Magnetkopf 2 um eine vertikale Achse NA drehbar gelagert. Um den Ausleger 20 und damit den Magnetkopf 2 in einem bestimmten Abstand über den Boden zu halten, ist außerdem eine Verbindungsstange 21 zwischen Ausleger 20 und Welle 33 vorgesehen.

Dadurch, daß der Ausleger in horizontaler Richtung drehbar an der Welle 33 angebracht ist, kann der Ausleger 20 gegenüber einem Boden bzw. einer Leitschiene 50 (siehe Fig. 3), die untenstehend noch im Detail noch beschrieben wird, nach oben bewegt werden und dadurch etwaigen Hindernissen, die sich auf der Leitschiene befinden, ausweichen. Damit der Magnetkopf nicht beschädigt wird, wenn er mit einem etwaigen Hindernis in Kontakt tritt, ist vor dem Magnetkopf in Fahrtrichtung eine Abweiseeinrichtung 25 angeordnet.

An der Welle 33 sind zwei Koppelstangen 29a und 29b fest angebracht. An diesen Koppelstangen sind um eine Achse in vertikaler Richtung drehbar eine erste Lenkstange 10a und eine zweite Lenkstange 10b gelagert. Durch diese Lenkstangen werden, bei einer durch den Ausleger 20 bewirkten Drehung der Welle 33, eine Vorderradlenkeinheit 1a und eine Hinterradlenkeinheit 1b betätigt. Da die Vorderradlenkeinheit 1a und die Hinterradlenkeinheit 1b im vorliegenden Fall identisch zueinander aufgebaut sind, wird im folgenden nur die Vorderradlenkeinheit 1a im Detail beschrieben.

Die Vorderradlenkeinheit 1a umfaßt einen zweischenkeligen Lenkstockhebel 11, der um eine vertikale Achse drehbar fest mit dem Rahmen des Wagens verbunden ist. Das Ende des ersten Schenkels ist drehbar mit der Lenkstange 10a verbunden, das Ende des zweiten Schenkels ist drehbar mit einer ersten Lenkschubstange 12 verbunden.

Weiterhin umfaßt die Vorderradlenkeinheit 1a einen Zwischenhebel 13, dessen eines Ende ebenfalls fest um eine vertikale Achse drehbar mit dem Rahmen des Wagens verbunden ist und dessen anderes Ende drehbar mit einer zweiten Lenkschubstange 14 verbunden ist. Wie insbesondere aus Fig. 1 ersichtlich, sind die erste Lenkschubstange 12 und die zweite Lenkschubstange jeweils um eine vertikale Achse 14 drehbar mit einer Spurstange 15 verbunden.

Das andere Ende der Lenkschubstange 12 ist mit einem ersten Radlenkhebel 16 drehbar verbunden. Das andere Ende des ersten Radlenkhebels 16 ist mit einem ersten, um eine vertikale Achse drehbar an dem Wagen befestigten Rad 18 verbunden. Auf gleiche Weise ist das andere Ende der zweiten Lenkschubstange 14 mit einem Radlenkhebel 17 drehbar verbunden. Das andere Ende des zweiten Radlenkhebels 17 ist entsprechend mit einem zweiten, um eine vertikale Achse drehbar an dem Wagen befestigten Rad 19 angeordnet.

Im folgenden wird erläutert, wie durch eine Auslenkung D des magnetisch mit einer Leitschiene 50 gekoppelten Magnetkopfs 2 eine Lenkung L der vier Räder 18, 19, 36 und 37 bewirkt wird.

Hierzu wird angenommen, daß die Leitschiene in Fahrtrichtung eine Krümmung nach links aufweist. Da der Magnetkopf 2 magnetisch an die Leitschiene gekoppelt ist, folgt der Magnetkopf dieser Linkskrümmung der Leitschiene und bewirkt dadurch eine Auslenkung des Auslegers 20 nach links bzw. in der Darstellung in Fig. 1 nach unten. Im folgenden werden die Auslenkungen der einzelnen Komponenten in bezug auf Fig. 1 angegeben.

Dadurch, daß die Koppelstangen 29a und 29b fest mit der Welle 33 verbunden sind, bewirkt die Auslenkung des Auslegers 20 nach unten eine Auslenkung der ersten Koppelstange 29a nach links und der zweiten Koppelstange 29b nach rechts. Demgemäß wird die erste Lenkstange 10a ebenfalls nach links und die zweite Lenkschubstange 10b nach rechts bewegt, wie durch die Pfeile in Fig. 1 angedeutet.

Dadurch, daß der Lenkstockhebel 11 fest um eine vertikale Achse drehbar mit dem Wagen verbunden ist, führt die Linksbewegung der Lenkstange 10a zu einer Bewegung des zweiten Schenkels 11b des Lenkstockhebels 11 nach oben. Gleiches gilt für den Lenkstockhebel der Hinterradlenkeinheit.

Durch die Bewegung des zweiten Schenkels 11b des Lenkstockhebels 11 nach oben wird die erste Lenkschubstange 12 ebenfalls nach oben bewegt. Weiterhin wird über die Spurstange 15, die ebenfalls nach oben bewegt wird, die zweite Lenkschubstange 14 nach oben bewegt. Gleiches gilt für die beiden Lenkschubstangen der Hinterradlenkeinheit.

Durch die Bewegung der Lenkschubstangen 12 und 14 nach oben werden die beiden Radlenkhebel 16 und 19 ebenfalls nach oben bewegt, wodurch die beiden Räder 18 und 19 in bezug auf ihre vertikale Drehachse nach links ausgelenkt werden.

Auf ähnliche Weise ergibt sich eine Auslenkung der Räder 36 und 37 in bezug auf ihre vertikale Drehachse nach rechts.

Durch geeignete Bemessung der einzelnen Komponenten der Vorderradlenkeinheit 1a und der Hinterradlenkeinheit 1b kann somit eine direkte Lenkung des Wagens in Abhängigkeit von der Auslenkung des Auslegers 20, die ihrerseits durch die magnetische Kopplung des Magnetkopfs 2 an die Leitschiene 50 bedingt ist, realisiert werden.

Dadurch, daß sowohl die Vorderräder als auch die Hinterräder lenkbar sind, kann durch die dargestellte Ausführungsform ein sehr kleiner Kurvenradius realisiert werden.

Bei einem erfindungsgemäßen Wagen mit einer Spurbreite von 750 mm und einem Radstand von 1000 mm, haben sich folgende Abmessungen für die einzelnen Komponenten als günstig erwiesen:
Ausleger 20: 375 mm
erste Koppelstange 29a, zweite Koppelstange 29b: 86 mm
erste Lenkstange 10a: 292 mm
zweite Lenkstange 10b: 954 mm
erster Schenkel 11 a des Lenkstockhebels 11: 170 mm
zweiter Schenkel 11 b des Lenkstockhebels 11: 130 mm
Winkel zwischen erstem Schenkel 11a und zweitem Schenkel 11 b des Lenkstockhebels 11: 97°
erste Lenkschubstange 12, zweite Lenkschubstange 14: 199 mm
Spurstange 15: 234 mm
erster Radlenkhebel 16, zweiter Radlenkhebel 17: 100mm
erster Schenkel des Lenkstockhebels der Hinterradlenkeinrichtung: 166 mm
Winkel zwischen erstem Schenkel und zweitem Schenkel des Lenkstockhebels der Hinterradlenkeinrichtung: 82°
(Die Abmessungen der einzelnen Komponenten sind hierbei jeweils von Drehpunkt zu Drehpunkt angegeben.)

Neben der in den Figuren 1 bis 3 dargestellten Ausführungsform sind eine Vielzahl von Abwandlungen möglich.

Beispielsweise können, im Gegensatz zu Fig. 2, die Lenkstangen für die Vorderradlenkeinheit und die Hinterradlenkeinheit in einer Ebene verlaufen. In diesem Fall ist es möglich, die Koppelstange einstückig auszubilden.Weiterhin kann auf die Vorderradlenkeinheit oder die Hinterradlenkeinheit verzichtet werden. Die in diesem Fall realisierten Kurvenradien sind zwar größer als in der Ausführungsform mit zwei Lenkeinheiten, der Wagen erlaubt dann allerdings auch Aufbauten, bei denen kein Platz für eine zweite Lenkeinheit zur Verfügung steht.

Außerdem kann der Magnetkopf direkt an der Welle 33 angebracht werden, d.h. es kann von einem Ausleger 20 abgesehen werden. In diesem Fall entfällt die durch den Ausleger 20 verursachte Hebelwirkung, so daß bei gleicher Ausbildung des Wagens eine größere Kopplungskraft zur Lenkung erforderlich ist. Eine derartige Ausführungsform läßt sich beispielsweise einsetzen, wenn nur geringe Lasten transportiert werden sollen.

Darüber hinaus ist die in Fig. 1 dargestellte Lenkung nur beispielhaft zu verstehen. Es können selbstverständlich auch andere Lenkmechanismen, bei denen eine Auslenkung eines Magnetkopfs zu einer entsprechenden direkten Lenkung führt, je nach Anwendungsgebiet, eingesetzt werden.

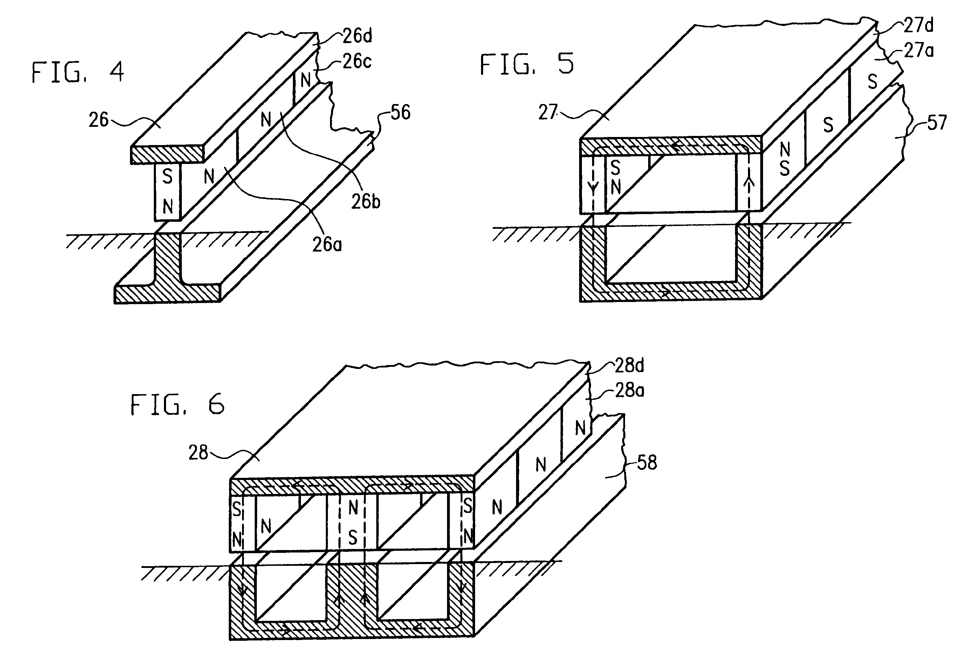

In Fig. 4 ist eine Ansicht eines Magnetkopfs 26 und einer Leitschiene 50 einer ersten Ausführungsform eines Systems gemäß der vorliegenden Erfindung dargestellt.

Der Magnetkopf besteht aus mehreren Stabmagneten 26a, 26b und 26c, die auf einer Polplatte 26d angebracht sind. Wie aus Fig. 4 ersichtlich, sind die Nordpole der Magneten 26a, 26b und 26c in Richtung zur Leitschiene 56 vorgesehen. Die Polplatte 26d dient einerseits zur Befestigung der Magneten 26a, 26b und 26c und andererseits zur Verstärkung des Magnetfelds. Die Anzahl der verwendeten Magneten bestimmt sich hierbei nach der erwünschten Kopplungsstärke zwischen Magnetkopf und Leitschiene.

Die Leitschiene 56 ist in Form eines T-förmigen Reaktionseisens, vorzugsweise eines Weicheisens, vorgesehen. Wie aus Fig. 4 ersichtlich, ist dieses Eisen bündig im Boden eingelassen. Hierdurch werden zum einen eine Verschmutzung und damit etwaige Betriebsunterbrechungen vermieden. Zum anderen kann acuh eine Verletzungsgefahr durch hervorstehende Schienen vermiedne werden.

Die Breite der Magneten 26a, 26b und 26c sowie die Breite des Schenkels des Rückschlußeisens 56 entsprechen einander. Insbesondere sind diese Breiten so schmal wie möglich zu halten, damit eine möglichst starke Kopplung zwischen den Magneten und dem Reaktionseisen gewährleistet ist.

Der dargestellte Magnetkopf ist vorzugsweise um eine vertikale Achse drehbar vorzugsweise am Fahrzeug oder am Ausleger befestigt, so daß er insbesondere einer kurvenförmigen Leitschiene nachfolgen kann, so daß immer eine maximale Kopplung zwischen Magnetkopf und Leitschiene gewährleistet ist.

In Fig. 5 ist eine Schrägansicht eines Magnetkopfs 27 und einer Leitschiene 57 einer zweiten Ausführungsform eines Systems gemäß der vorliegenden Erfindung dargestellt.

Die in Fig. 5 gezeigte Ausführungsform unterscheidet sich von der in Fig. 4 dargestellten Form dadurch, daß sowohl der Magnetkopf als auch die Leitschiene U-förmig ausgebildet sind. Wie in Fig. 5 dargestellt, kann durch die U-förmige Ausbildung ein höherer Magnetfluß und damit eine stärkere Kopplung erzielt werden.

Im übrigen gelten die bereits im Zusammenhang mit Fig. 4 gemachten Ausführungen.

Fig. 6 ist eine Schrägansicht eines Magnetkopfs 28 und einer Leitschiene 58 einer dritten Ausführungsform eines Systems gemäß der vorliegenden Erfindung. Sowohl der Magnetkopf 28 als auch das Reaktionseisen 58 sind hierbei W-förmig ausgebildet. Hierdurch kann eine gegenüber der in Fig. 5 dargestellten Ausführungsform erhöhte magnetische Kopplung erzielt werden.

Im übrigen gelten die gleichen Ausführungen, wie sie bereits im Zusammenhang mit den Figuren 4 und 6 gemacht worden sind.

Neben den in den Figuren 4 bis 6 dargestellten Ausführungsformen sind eine Vielzahl von Abwandlungen möglich.

So können beispielsweise bei den Magnetköpfen anstelle der Permanentmagneten auch Elektromagneten verwendet werden. Dadurch wird zwar der Aufbau des Magnetkopfs komplizierter, andererseits führt ein Elektromagnet zu einer verbesserten Handhabbarkeit der Wagen. Durch Ausschalten des Elektromagneten kann der Wagen beispielsweise unabhängig von der Leitschiene bewegt werden. Dies ist insbesondere vorteilhaft, wenn der Wagen über eine Weiche in einem Leitschienensystem fahren soll oder ganz aus dem Leitschienensystem genommen werden soll.

Weiterhin können auch die Leitschienen in Form von Magneten, beispielsweise Permanentmagneten oder Elektromagneten vorgesehen werden. Hierdurch kann eine besonders starke magnetische Kopplung des Magnetkopfs an die Leitschiene verwirklicht werden. Diese Weiterbildung eignet sich demnach insbesondere, wenn hohe Lenkkräfte, beispielsweise aufgrund eines sehr hohen Ladegewichts erforderlich sind. Ein Elektromagnet erleichtert eine Steuerung der Wagen des Systems. Beispielsweise können durch Ein- und Ausschalten verschiedene Weichenstellungen in einem Leitschienensystem realisiert werden.

Die in den Figuren 4 bis 6 dargestellten Polungen sind ebenfalls nur beispielhaft zu verstehen. Es ist selbstverständlich mögich, auch andere Polungen einzusetzen.

## Patentansprüche

1. Ein selbstfahrender Wagen mit
einer Lenkeinrichtung (1a, 1b), und
einem Magnetkopf (2),
der um eine vertikal durch den Wagen verlaufende Achse (A) drehbar gelagert ist, und
zur magnetischen Kopplung an eine Leitschiene zur Führung des selbstfahrenden Wagens ausgebildet ist, derart daß der Magnetkopf bei Betrieb des selbstfahrenden Wagens der Leitschiene folgt,
**dadurch gekennzeichnet,**
daß der drehbar gelagerte Magnetkopf mit der Lenkeinrichtung mechanisch gekoppelt ist (3), so daß eine durch eine Leitschiene hervorgerufene Drehung (D) des Magnetkopfs um die vertikale Achse eine dem Verlauf der Leitschiene entsprechende Steuerung (L) der Lenkeinrichtung bewirkt.

2. Der Wagen nach Anspruch 1, in welchem die Lenkeinrichtung eine Vorderradlenkeinheit (1a) und/oder eine Hinterradlenkeinheit (1b) aufweist, und der drehbar gelagerte Magnetkopf (2) mit der Vorderradlenkeinheit und/oder der Hinterradlenkeinheit mechanisch gekoppelt ist.

3. Der Wagen nach Anspruch 2, in welchem die Vorderradlenkeinheit (1 a) und/oder die Hinterradlenkeinheit (1b) durch jeweils eine Lenkstange (10a, 10b) mit dem drehbar gelagerten Magnetkopf (2) gekoppelt ist.

4. Der Wagen nach Anspruch 3, in welchem die Lenkstange (10a) für die Vorderradlenkeinheit und die Lenkstange für Hinterradlenkeinheit (10b) mittels einer Koppelstange (29a, 29b) mit dem drehbar gelagerten Magnetkopf (2) mechanisch verbunden sind.

5. Der Wagen nach einem der vorangegangenen Ansprüche, in welchem der Magnetkopf (2) drehbar an einem ersten Ende eines Auslegers (20) vorgesehen ist, und das andere Ende des Auslegers drehbar um die vertikale Achse (A) gelagert ist und mechanisch mit der Lenkeinrichtung (1a, 1b)gekoppelt ist.

6. Der Wagen nach Anspruch 5 in Verbindung mit Anspruch 4, in welchem der Ausleger (20) fest mit der Koppelstange (29a, 29b) verbunden ist.

7. Der Wagen nach Anspruch 6, in welchem der Ausleger (20) weiterhin um eine horizontale Achse (hA) drehbar gelagert ist.

8. Der Wagen nach einem der vorangegangenen Ansprüche, in welchem der Magnetkopf eine in Fahrtrichtung angeordnete Abweiseeinrichtung (25) aufweist.

9. Der Wagen nach einem der Ansprüche 2 bis 8, in welcher jede Lenkeinheit umfaßt:
einen zweischenkligen Lenkstockhebel (11), der drehbar mit dem Wagen verbunden ist, wobei das Ende des einen Schenkels (11 a) drehbar mit dem Lenkhebel (10a, 10b) verbunden ist,
eine erste Lenkschubstange (12), deren eines Ende mit dem Ende des anderen Schenkels (11b) des Lenkstockhebels (11) drehbar verbunden ist,
einen Zwischenhebel (13), dessen eines Ende drehbar mit dem Wagen verbunden ist,
eine zweite Lenkschubstange (14), deren eines Ende mit dem Zwischenhebel (13) drehbar verbunden ist,
einen Spurstange (15), deren eines Ende drehbar mit dem einen Ende der ersten Lenkschubstange (12) und deren anderes Ende drehbar mit dem einen Ende der zweiten Lenkschubstange (14) verbunden ist,
einen ersten Radlenkhebel (16), dessen eines Ende mit dem anderen Ende der ersten Lenkschubstange (12) drehbar verbunden ist und dessen anderes Ende mit einem ersten um eine vertikale Achse drehbar an dem Wagen befestigtem Rad (18) zur Drehung desselben um diese Achse vorgesehen ist,
einen zweiten Radlenkhebel (17), dessen eines Ende mit dem anderen Ende der zweiten Lenkschubstange (14) drehbar verbunden ist und dessen anderes Ende mit einem zweiten um eine vertikale Achse drehbar an dem Wagen befestigtem Rad (19) zur Drehung desselben um diese Achse vorgesehen ist.

10. Der Wagen nach einem der vorangegangenen Ansprüche, in welchem nach dem Magnetkopf eine Kraftverstärkungseinrichtung, insbesondere ein Servomotor, vorgesehen ist.

11. Der Wagen nach einem der vorangegangenen Ansprüche, in welchem der Magnetkopf (2) wenigstens einen Permanentmagneten (22) oder wenigstens einen Elektromagneten umfaßt.

12. Der Wagen nach einem der vorangegangenen Ansprüche, in welchem der Magnetkopf einen T-förmigen (26), U-förmigen (27) oder W-förmigen (28) Querschnitt senkrecht zur Längsrichtung des Magnetkopfs aufweist, und insbesondere der bzw. die Schenkel durch wenigstens einen auf einer Polplatte (26d; 27d; 28d) vorgesehenen Stabmagneten (26a; 26b; 26c) ausgebildet sind.

13. System umfassend:
wenigstens einen selbstfahrenden Wagen nach einem der vorangegangenen Ansprüche, und
eine Leitschiene zur Führung des selbstfahrenden Wagens, wobei
der Wagen im Betrieb mit der Leitschiene magnetisch so gekoppelt ist, daß eine durch die Leitschiene verursachte Drehung des Magnetkopfs um die vertikale Achse eine der Leitlinie entsprechende Steuerung der Lenkeinrichtung bewirkt.

14. System nach Anspruch 13, in welchem die Leitschiene (56; 57; 58) im Boden (60) versenkt ist und eine flache Oberseite aufweist, die in der Ebene des Bodens liegt.

15. System nach Anspruch 13 oder 14, in welchem die Leitschiene
einen Permanentmagneten oder einen Elektromagneten umfaßt, wobei die Polung des in Richtung des Wagens weisenden Abschnitts der Leitschiene und die Polung des in Richtung der Schiene weisenden Abschnitts des Magnetkopfs einander entgegengesetzte Polarität aufweisen, oder
ein Reaktionseisen aufweist.

16. System nach Anspruch 15, in welchem die Leitschiene T-förmig (56), U-förmig (57) oder W-förmig (58) ausgebildet ist und so angeordnet ist, daß jeweils der bzw. die Schenkel der T-Form, der U-Form bzw. der W-Form in Richtung des Magnetkopfs (26; 27; 28) zeigen.

17. System nach Anspruch 15 mit einem selbstfahrenden Wagen nach Anspruch 12, in welchem die Breitenabmessungen des Schenkels bzw. der Schenkel des T-förmigen (26), U-förmigen (27) oder W-förmigen (28) Magnetkopfs den Breitenabmessungen des Schenkels bzw. der Schenkel der T-förmigen (56), U-förmigen (57) oder W-förmigen (58) Leitschiene entsprechen.
